# EUROPÄISCHE PATENTSCHRIFT

(11) **EP 1 349 480 B1**
(45) Veröffentlichungstag und Bekanntmachung des Hinweises auf die Patenterteilung: **05.08.2009**
(21) Anmeldenummer: 01272634.5
(22) Anmeldetag: 04.12.2001
(51) Int. Cl.: A47L 15/42, D06F 39/10, B01D 29/03

(54) **SIEB sowie Geschirrspülmaschine**
FILTER and dishwasher
CRIBLE et lave vaiselle

(30) Priorität: 29.12.2000 DE 10065660
(43) Veröffentlichungstag der Anmeldung: 08.10.2003
(73) Patentinhaber: BSH Bosch und Siemens Hausgeräte GmbH, 81739 München (DE)
(72) Erfinder: JERG, Helmut, 89537 Giengen (DE)
(86) Internationale Anmeldenummer: PCT/EP2001/014191
(87) Internationale Veröffentlichungsnummer: WO 2002/053006

(56) Entgegenhaltungen:
- DE-A- 2 945 929
- FR-A- 2 328 498
- US-A- 3 122 148
- US-A- 3 179 116
- US-A- 5 554 284

## Beschreibung

Die Erfindung betrifft ein Sieb, bei dem die Querschnittsgröße seiner Sieböffnungen in Abhängigkeit von einer dem das Sieb durchsetzenden Medium innewohnenden Größe selbsttätig veränderbar ist.

Siebe werden in der Technik an vielen Stellen oder bei vielen Prozessen eingesetzt, um eine Abtrennung von Teilen, die in einem das Sieb durchsetzenden Medium enthalten sind, zu erreichen. So werden insbesondere in Geschirrspülmaschinen Siebe eingesetzt um Speisereste, die in der Spülflotte mitgeführt werden, abzusondern. Bei Geschirrspülmaschinen besteht dabei das besondere Problem, dass die abgesonderten Speisereste wieder von dem Sieb entfernt werden müssen.

Zur Lösung dieses Problems sind bei einem durch die DE-A1-29 45 929 bekannten, selbstreinigenden Sieb zwei mit parallelen Längsschlitzen versehene Scheiben vorgesehen, die einerseits in Bezug auf die Schlitzrichtung um 90° gegeneinander versetzt und andererseits axial beweglich zueinander angeordnet sind. In der einen Stellung liegen die Scheiben aneinander an, so dass durch die sich kreuzenden Längsschlitze kleine quadratische Durchtrittsöffnungen gebildet sind, durch die ein Zurückhalten von Teilen bewirkt wird, die größer als der Durchtrittsquerschnitt dieser kleinen Durchtrittsöffnungen sind. Ein Reinigen des Siebes wird dadurch erreicht, dass durch eine Änderung der Strömungsrichtung zumindest die eine Siebscheibe gegenüber der anderen Siebscheibe axial verschoben wird, so dass nunmehr die Längsschlitze die Durchtrittsöffnungen bilden. Durch diese im Querschnitt wesentlich größeren Längsschlitze können die zuvor abgesonderten Teile abgeführt werden, so dass das Sieb wieder frei wird. Ein solcher Aufbau eines Siebes ist konstruktiv aufwendig. Außerdem besteht die Gefahr des Verklemmens der beweglich angeordneten Siebscheiben und zur Durchführung des Reinigungsvorganges ist eine Änderung der Strömungsrichtung des das Sieb durchsetzenden Mediums notwendig.

Beim Filter der US 5,554,284 sind in einer Filterplatte elastische Federn vorgesehen, die an drei Seiten freigeschnitten sind und somit dort schlitzförmige Öffnungen bereitstellen. Aufgrund des Drucks einer zu filternden, nach unten fließenden Flüssigkeit bewegen sich die elastischen Federn nach unten, bis sie sich an ihren abgeschrägten, freien Stirnkanten gegenseitig abstützen. Beim Rückspülen in umgekehrter Richtung bewegen sich die elastischen Federn auf die andere Seite der Filterplatte, wobei sich die schlitzförmigen Öffnungen des Filters vergrößern, so dass Partikel, die in Spalten des Filters festgehalten werden, ohne Schwierigkeiten entfernt werden können.

Bei dem selbstreinigenden, variablen Filter für Geschirrspüler der US 3,179,116 in Form einer helixförmigen Feder wird der Abstand zwischen deren Faltungen mit Hilfe des Flüssigkeitsdrucks angepasst, um den Filterungsgrad einzustellen.

Der Erfindung liegt die Aufgabe zugrunde, ein Sieb zu schaffen, welches diese Nachteile nicht mehr aufweist.

Die Lösung der gestellten Aufgabe gelingt nach der Erfindung dadurch, dass die Sieböffnungen durch Elemente verdeckt oder überdeckt sind, deren Form oder Lage gegenüber den Sieböffnungen unter dem Einfluss der Wärme des das Sieb durchsetzenden Mediums veränderbar ist. Um bei einem solchen Sieb beispielsweise eine Reinigung vornehmen zu können, muss lediglich die betreffende dem durch das Sieb strömenden Medium innewohnende Größe verändert werden. Die durch eine solche Veränderung bewirkte Querschnittsänderung der Sieböffnungen erlaubt ein Freispülen des Siebes von abgelagerten Teilen. Das Sieb besteht nur noch aus einem Teil, welches feststehend angeordnet ist. Damit ist ein Verklemmen, wie es bei einem beweglich angebrachten Sieb auftreten kann, nicht mehr möglich. Ein einteiliges Sieb bedeutet auch einen geringeren Materialaufwand. Die Änderung einer dem Medium innewohnenden Größe, z.B. Temperatur oder Strömungsgeschwindigkeit, ist einfacher zu erreichen als eine Änderung der Strömungsrichtung.

Dadurch, dass die Sieböffnungen durch Elemente verdeckt oder überdeckt sind, deren Form oder Lage gegenüber den Sieböffnungen unter dem Einfluss von Wärme veränderbar ist, kann in Abhängigkeit von der Temperatur des das Sieb durchströmenden Mediums die Querschnittsgröße der Sieböffnungen beeinflusst werden. Da bei vielen technischen Prozessen ohnehin ein Temperaturwechsel bei dem das Sieb durchsetzenden Medium auftritt, ergibt sich die Reinigung des Siebes praktisch zwangsläufig.

Eine konstruktiv besonders einfache Ausbildung des Siebes ergibt sich insbesondere dadurch, dass die Elemente nach einer vorteilhaften Weiterbildung zungenartig aus den Sieböffnungen ausgestanzt sind. Die zungenartigen Elemente schwenken bei einer bestimmten Temperatur aus den Sieböffnungen heraus, wodurch sich eine Vergrößerung des Durchtrittsquerschnitts ergibt.

Vorteilhafterweise können die Elemente aus einer Formgedächtnislegierung bestehen oder als Bimetallelemente ausgebildet sein. Derartige Legierungen ändern beispielsweise unter dem Einfluss von Wärme ihre Form oder Lage. D.h. beim Erreichen einer bestimmten Temperatur nehmen sie eine andere Form an oder eine andere Lage ein und kehren wieder in ursprüngliche Form oder Lage zurück, wenn wieder die ursprüngliche Temperatur herrscht. Da bei vielen technischen Prozessen ohnehin ein Temperaturwechsel bei dem das Sieb durchsetzenden Medium auftritt, ergibt sich die Reinigung des Siebes somit praktisch zwangsläufig.

Ein Sieb der vorbeschriebenen Art lässt sich mit besonderen Vorteilen in einer Geschirrspülmaschine verwenden. In einer Geschirrspülmaschine dient das Sieb zum Ausfiltern von in der Spülflotte enthaltenen Speiseresten. Dabei ist es notwendig, dass abgelagerte Speisereste während des Ablaufes des Spülprogramms gelegentlich von dem Sieb abgespült werden. Da die Spülflotte während der einzelnen Spülvorgänge, z.B. Vorspülen, Reinigen, Zwischenspülen, Klarspülen, eine unterschiedliche Temperatur aufweist, ergeben sich bei einer temperaturabhängigen Veränderung der Durchtrittsquerschnitte während des Ablaufes des Spülprogramms Abschnitte, in denen der Querschnitt der Sieböffnungen soweit vergrößert ist, dass abgelagerte Speisereste durch die Sieböffnungen hindurch abgeführt werden können. Es tritt somit zwangsläufig eine Selbstreinigung des Siebes auf.

Anhand eines in der Zeichnung dargestellten Ausführungsbeispieles wird die Erfindung nachfolgend noch näher erläutert.

Es zeigen:
- Figur 1: ein plattenförmig ausgebildetes Sieb, mit Sieböffnungen, in denen zungenartige Laschen ausgestanzt sind,
- Figur 2: einen Teilquerschnitt des Siebes in einem Zustand, bei dem die zungenartigen Laschen aus den Sieböffnungen herausgeschwenkt sind und
- Figur 3: einen Teilquerschnitt des Siebes in einem Zustand, bei dem die zungenartigen Laschen in der Ebene des plattenförmigen Siebkörpers liegen.

Mit 1 ist ein Sieb bezeichnet, das einen plattenförmigen Körper 2 aufweist. Dieser plattenförmige Körper 2 trägt zwei Einsätze 3, deren Material aus einer Formgedächtnislegierung besteht. Derartige Legierungen ändern beispielsweise unter dem Einfluss von Wärme ihre Form oder Lage. D.h. beim Erreichen einer bestimmten Temperatur nehmen sie eine andere Form an oder eine andere Lage ein und kehren wieder in ursprüngliche Form oder Lage zurück, wenn wieder die ursprüngliche Temperatur herrscht.

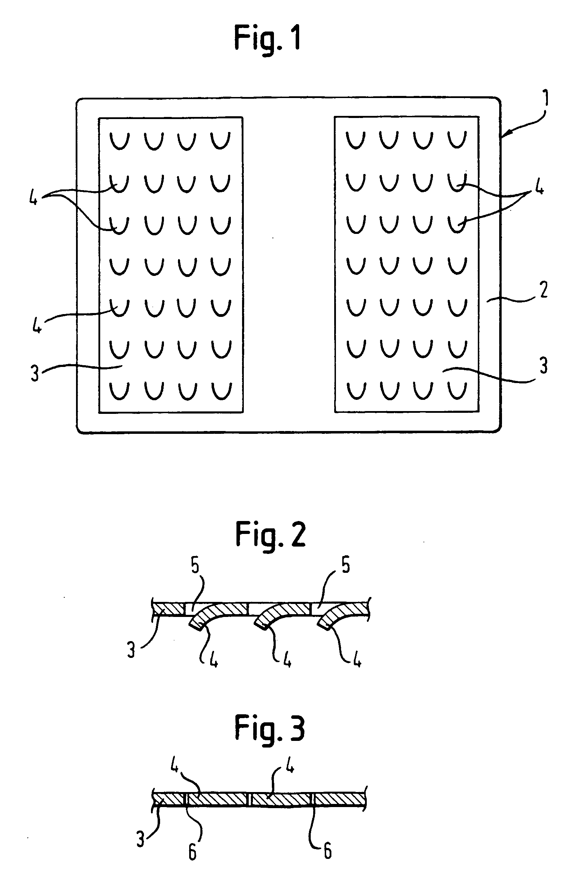

An den Einsätzen 3 sind zungenartige Laschen 4 ausgestanzt. Diese zungenartige Laschen 4 ändern unter dem Einfluss von Wärme ihre Lage. So tritt bei einer bestimmten Temperatur ein Verbiegen oder Verschwenken dieser Laschen 4 auf, wie es die Fig. 2 zeigt. Durch dieses Verbiegen oder Verschwenken der Laschen entstehen entsprechend große Durchtrittsöffnungen 5 in den Einsätzen 3.

Bei einer anderen, beispielsweise höheren Temperatur nehmen die Laschen 4 eine Lage ein, in der sie in der Ebene der Einsätze 3 liegen. Damit verbleiben als Durchtrittsöffnungen nur noch die schmalen, beim Ausstanzen der Laschen 4 entstandenen Stanzschlitze 6, wie dies aus der Fig. 3 zu ersehen ist. Da diese Stanzschlitze 6 sehr schmal sind, ca. 0,2 mm, können nur noch entsprechend kleine, von dem Medium mitgeführte Teile durch diese Stanzschlitze 6 hindurchtreten. In diesem Falle besitzt das Sieb 1 eine hohe Filterwirkung, d.h. es werden sehr viele Teile abgelagert. Tritt dann infolge einer TemperaturÄnderung das vorbeschriebene Verschwenken der Laschen 4 ein, werden die abgelagerten Teile durch die vergrößerten Durchtrittsöffnungen 5 abgeführt und das Sieb 1 ist wieder frei.

## Patentansprüche

1. Sieb, bei dem die Querschnittsgröße seiner Sieböffnungen in Abhängigkeit von' einer dem das Sieb (1) durchsetzenden Medium innewohnenden Größe selbsttätig veränderbar ist, **dadurch gekennzeichnet, dass** die Sieböffnungen durch Elemente verdeckt oder überdeckt sind, deren Form oder Lage gegenüber den Sieböffnungen unter dem Einfluss der Wärme des das Sieb (1) durchsetzenden Mediums veränderbar ist.

2. Sieb nach Anspruch 1, **dadurch gekennzeichnet, dass** die Elemente (4) zungenartig aus den Sieböffnungen ausgestanzt sind.

3. Sieb nach Anspruch 1 oder 2, **dadurch gekennzeichnet, dass** die Elemente (4) aus einer Formgedächtnislegierung bestehen.

4. Sieb nach Anspruch 1 oder 2, **dadurch gekennzeichnet, dass** die Elemente als Bimetallelemente ausgebildet sind.

5. Geschirrspülmaschine mit einem Sieb nach einem der vorhergehenden Ansprüche.

## Claims

1. Filter in which the cross-sectional size of its filter openings is automatically variable in dependence on a magnitude intrinsic to the medium flowing through the filter (1), **characterised in that** the filter openings are covered or masked by elements of which the shape or position relative to the filter openings is variable under the influence of the heat of the medium flowing through the filter (1).

2. Filter according to claim 1, **characterised in that** the elements (4) are punched in tongue-like manner out of the filter openings.

3. Filter according to claim 1 or 2, **characterised in that** the elements (4) consist of a shape-memory alloy.

4. Filter according to claim 1 or 2, **characterised in that** the elements are constructed as bimetallic elements.

5. Dishwashing machine with a filter according to any one of the preceding claims.

## Revendications

1. Filtre dans lequel la taille de la coupe transversale de son maillage est modifiable automatiquement en fonction d'une grandeur inhérente au médium traversant le filtre (1), **caractérisé en ce que** le maillage est couvert ou recouvert par des éléments dont la forme ou la position par rapport au maillage est modifiable par l'influence de la chaleur du médium traversant le filtre (1).

2. Filtre selon la revendication 1, **caractérisé en ce que** les éléments (4) sont découpés sous forme de languettes dans le maillage.

3. Filtre selon la revendication 1 ou 2, **caractérisé en ce que** les éléments (4) sont composés d'un alliage à mémoire de forme.

4. Filtre selon la revendication 1 ou 2, **caractérisé en ce que** les éléments sont exécutés sous forme d'éléments bimétalliques.

5. Lave-vaisselle avec un filtre selon l'une des revendications précédentes.
